Europäisches Patentamt

European Patent Office

Office européen des brevets

(11) Veröffentlichungsnummer: **0 258 796 B1**

(12) **EUROPÄISCHE PATENTSCHRIFT**

(45) Veröffentlichungstag der Patentschrift: **27.11.91**

(51) Int. Cl.⁵: **H02K 15/09**

(21) Anmeldenummer: **87112350.1**

(22) Anmeldetag: **25.08.87**

(54) **Vorrichtung zum Bewickeln von Ankern elektrischer Maschinen.**

(30) Priorität: **03.09.86 DE 3630024**

(43) Veröffentlichungstag der Anmeldung:
**09.03.88 Patentblatt  88/10**

(45) Bekanntmachung des Hinweises auf die
Patenterteilung:
**27.11.91 Patentblatt  91/48**

(84) Benannte Vertragsstaaten:
**AT CH DE ES GB IT LI**

(56) Entgegenhaltungen:
**AT-A- 216 622
DE-A- 1 263 159
DE-C- 2 102 354
US-A- 3 299 913**

(73) Patentinhaber: **METEOR AG
Moosstrasse 7
CH-8803 Rüschlikon(CH)**

(72) Erfinder: **Ruben, Nikolaus
Waldstrasse 39
CH-8806 Gattikon(CH)**
Erfinder: **Tresch, Josef
Schlossmattstrasse 15
CH-8802 Kilchberg(CH)**

(74) Vertreter: **Kaiser, Helmut, Dr. et al
Asea Brown Boveri AG TEI-
Immaterialgüterrecht Wiesenstrasse 26
CH-5401 Baden(CH)**

Rank Xerox (UK) Business Services

**Beschreibung**

Die Erfindung betrifft eine Vorrichtung, wie sie im Oberbegriff des Anspruchs 1 vorausgesetzt ist.

Aus der DE-PS 21 02 354 ist eine Mehrfachwickelvorrichtung für Motorrotoren bekannt, bei der ein Rotorträger senkrecht angeordnete Bohrungen mit Buchsen aufweist, in welche die Rotoren mit ihren dem Kollektor abgekehrten Wellenende einsetzbar sind. In der Wickelposition werden die Rotoren gegen Anlagerippen angedrückt, sobald Spannköpfe in ihre Wirkstellung überführt sind, wobei im Spannkopf eine federbelastete Kugel vorgesehen ist, die in eine der Nuten drückt. Die Spannköpfe haben an ihren vorderen Stirnflächen je eine der Mantelfläche der Rotorpakete angepasste Ausnehmung. Die Ausnehmungen reichen bis an die Rotornuten, in denen jeweils der Draht bei feststehendem Rotor einzuwickeln ist, während die neben der Ausnehmung verbleibenden Teile der Stirnfläche durch Abschrägungen und Abrundungen als Leitflächen, sogenannte Wickelschablonen, für den einzuwickelnden Draht ausgebildet sind. Jeder Spannkopf ist auf einer Welle gelagert, wobei die Wellen an ihren Spannköpfen zugekehrten Enden je einen Wickelarm, bestehend aus einem Drahtbügel mit am freien Ende vorgesehener Führungsrolle, aufweisen. Beim Drehen der Wellen führen die Führungsrollen kreisförmige Bewegungsbahnen aus und wickeln dabei die Drähte in die Rotornuten ein. Das Schalten und Ausrichten der Rotoren erfolgt durch eine jeweils mit einer Nase in die Nuten eingreifenden Klinke.

Die Wiceklvorrichtung ist jedoch relativ kompliziert, weil insbesondere wegen der fehlenden Verstellbarkeit der Wickelarme die Drahteinführung zur Bildung der einzelnen Spulen nicht regelbar ist und die Vorrichtung für extrem kleine Rotoren weniger geeignet ist, da grössere Stillstände bei sehr kurzen Wicklungstaktzeiten nicht zu vermeiden sind.

Es sind auch Mehrfachwickelspulenmaschinen, beispielsweise gemäss CH-A5-667753 zur lagenweisen Bewicklung von elektrischen Spulen bekannt. Um die grosse Vielfalt der unterschiedlich ausgebildeten Spulenkörper an derartigen Wickelmaschinen bewickeln zu können, ist die Bewegung der Drahtführer und der Drahttrenneinrichtungen in X-, Y- und Z-Achsen verschiebbar ausgebildet, wobei die Drahttrenneinrichtungen gegenüber dem Drahtführer zusätzlich parallel verschiebbar und um die eigene Hochachse drehbar und zusammen mit den Drahtführern kippbar ausgebildet sind. Dadurch ist gleichzeitig gewährleistet, dass die Spulendrahtenden an alle möglichen Anschlusselemente automatisch exakt und schnell angebracht werden können. Die Anschlusselemente können radial, axial, einseitig und beidseitig zur Spule und dgl. angeordnet sein. Die Bewicklung der Spulen erfolgt durch Drehen der im Wickelwerkzeug eingesetzten Spulen um die Wickelwerkzeugachse, wobei der Drahtführer lediglich eine Vorschubbewegung zum sauberen Wickeln der einzelnen Lagen ausübt. Dadurch sind sehr hohe Wickeldrehzahlen möglich, wobei auch bei extrem kurzen Wickeltaktzeiten die Verlustzeiten gering gehalten werden können.

Vorrichtungen gemäss dem Oberbegriff des Anspruchs 1 sind aus der AT-PS 216 622 und der DE-PS 12 63 159 bekannt. Bei diesen Ankerwickelmaschinen wird der Anker von einer Spannvorrichtung am Blechpaket ergriffen, wobei sich auch ein Leitkörper an das Blechpaket anlegt, dessen Leitflächen dafür sorgen, dass der von der Vorratsrolle kommende Draht in die jeweils zu bewickelnden Nuten hineingeleitet wird. Hierbei rotiert der Anker mit zur Wickelachse senkrechter Ankerachse, und zum Wickeln der nächsten Wicklung wird der Anker bei stillstehendem Wickelwerkzeug um eine Nutenteilung weitergedreht. Bei der österreichischen Patentschrift erfolgt eine Fixierung in der jeweiligen Wickelstellung mit Hilfe einer in einen Nutspalt drückenden federnden Kugelraste. Zum Weiterschalten des Ankers für die nächste Wicklung drückt ein Winkelhaken gegen eine Nutkante und verdreht den Anker beim Drücken einer Taste um eine Nutteilung. Bei diesen bekannten Wickelmaschinen wird der Draht durch die erwähnten Leitflächen in die Nut eingeführt, wobei er sich jedoch nicht sauber lagenweise aufwickelt.

Ausgehend von diesem Stand der Technik liegt der im Anspruch 1 angegebenen Efindung die Aufgabe zugrunde, für kleine Wickelkörper mit mehreren Wickelachsen, insbesondere mehrpolige mit Kollektoren versehene Rotoren mit geringer gerader oder ungerader Nutenzahl, eine Wickelvorrichtung zu schaffen, bei welcher sich Wickelschablonen und umlaufende Wickelarme erübrigen und die Drahteinführung in die Nuten zur Bildung der lagenweise gewickelten Spulen wesentlich verbessert werden kann.

Ein Vorteil der Erfindung besteht insbesondere darin, dass das Wickelwerkzeug zusammen mit der Wickelkörperaufnahme eine Wickeleinheit bildet, so dass die Bewicklung von Wickelkörpern mit mehreren Spulenwickelachsen derart erfolgen kann, dass jeweils eine Spulenwickelachse des Wickelkörpers koaxial mit der Wickelwerkzeugachse positionier und fixiert wird und beim Rotieren des Wickelkörpers mit dem Wickelwerkzeug bewickelt wird, während der Drahtführer eine vorbestimmte Verlegebewegung für die Lagenwicklung ausübt. Dadurch erübrigen sich die bisher erforderlichen Wickelarme und Wickelschablonen.

Durch die Hin- und Her-Verlegebewegung des Drahtführers wird zusätzlich eine gleichmässigere Spulenwicklung mit grösserem Füllfaktor als bei der üblichen Rotorbewicklung mit Wickelarmen erzielt.

Ein weiterer Vorteil besteht darin, dass das Wickeln durch Rotation des mit der Wickelkörperaufnahme integrierten Wickelwerkzeuges bei mehrfach höheren Wickeldrehzahlen verglichen mit den bisher üblichen Wickelmaschinen mit Wickelarmen erfolgt, so dass eine wesentliche Produktionssteigerung gewährleistet ist.

In vorteilhafter Weise werden die bei Lagenwikkelmaschinen bekannten Anordnungen der Drahtführer und Drahttrenneinrichtungen übernommen und mit den zusätzlich erforderlichen Schalteinrichtugen kombiniert, so dass Drahtführungen und Festlegung der Spulendrahtenden sowie das Trennen der Spulendrahtenden an allen möglichen Stellen automatisch und exakt bei minimalen Verlustzeiten auch bei extrem kurzen Wickeltaktzeiten gewährleistet ist.

Die Erfindung soll nachstehend an einem Ausführungsbeispiel näher erläutert werden.

Es zeigen:

Fig.1 eine perspektivische Teilansicht einer Mahrfachwickelmaschine im Bereich der ersten zwei Wickelstellen mit einem erfindungsgemässen mit einer Wickelkörperaufnahme integrierten Wickelwerkzeug,

Fig.2 einen Längsschnitt des Wickelwerkzeuges gemäss Fig.1,

Fig.2a einen Grundriss des Wickelwerkzeuges gemäss Fig.2 und

Fig.3 einen bewickelten 3-poligen Rotor mit an Anschlussstiften des Kollektors befestigten und entlasteten (strichliert) Spulendrahtenden.

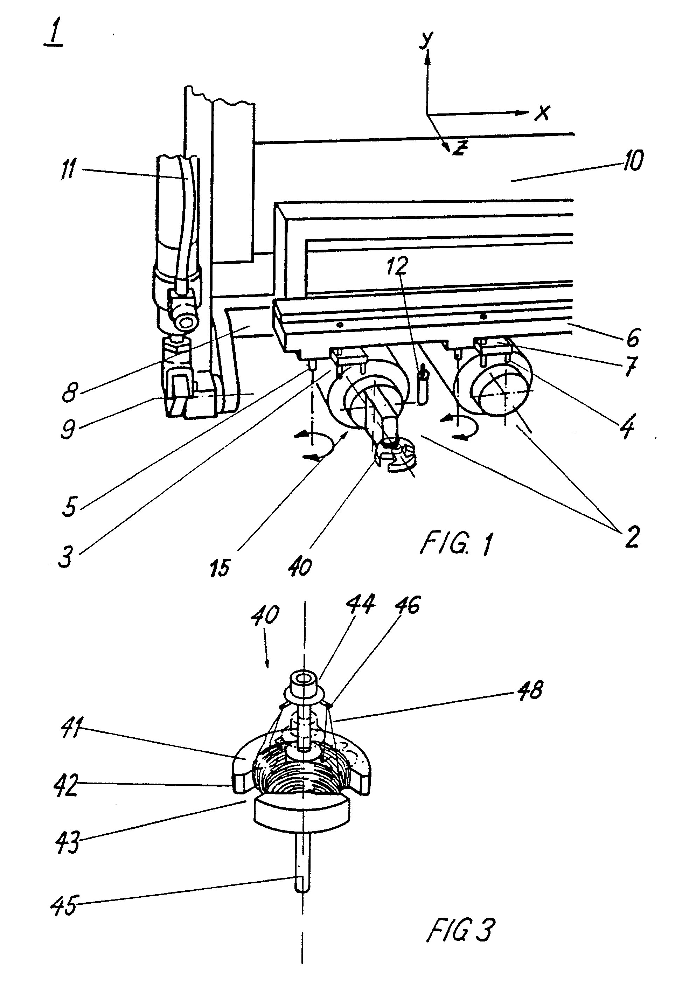

In Fig.1 ist eine im Bereich der ersten zwei Wickelstellen (2) dargestellte Mehrfachwickelmaschine mit (1) bezeichnet. Für jede Wickelstelle (2) ist ein Drahtführer (3) und eine Schalteinrichtung (4) und einer damit wirkverbundenen Drahttrenneinrichtung (5) vorgesehen. Der Drahtführer (3) und die Schalteinrichtung (4) sind in Halterungen (7) angeordnet und mit einem Schwenkarm (8) verbunden. Die Drahttrenneinrichtungen (5) sind in einer Halterung (6) angeordnet, die ebenfalls mit dem Schwenkarm (8) verbunden ist, der um eine Kippwelle (9) bis um 90° mittels eines Pneumatikzylinders schwenkbar ist. Zum Bewegen des Drahtführers (3), der Schalteinrichtung (4) und der Drahttrenneinrichtung (5) dient ein in X-, Y- und Z-Achsen verschiebbarer Schlitten (10). Die Drahttrenneinrichtung (5) ist zusätzlich gegenüber dem Drahtführer (3) und der Schalteinrichtung (4) parallel verschiebbar und im ihre Hochachse drehbar ausgebildet. Das Zusammenwirken des Drahtführers (3) mit der Schalteinrichtung (4) und der Drahttrenneinrichtung (5) ermöglicht eine universelle Bearbeitung der Spulendrahtenden (48) (Fig. 3) bei unterschiedlich ausgebildeten Wickelkörpern mit mehreren Spulenwickelachsen, beispielsweise an einem 3-poligen Rotor (40) an radial oder auch axial an einem Kollektor (44) (Fig. 3) angeordneten Anschlussstiften (46). Ein solcher Rotor (40) ist zur Bewicklung in einem Wickelwerkzeug (15) in der ersten Wickelstelle (2) der Mehrfachwickelmaschine (1) eingesetzt.

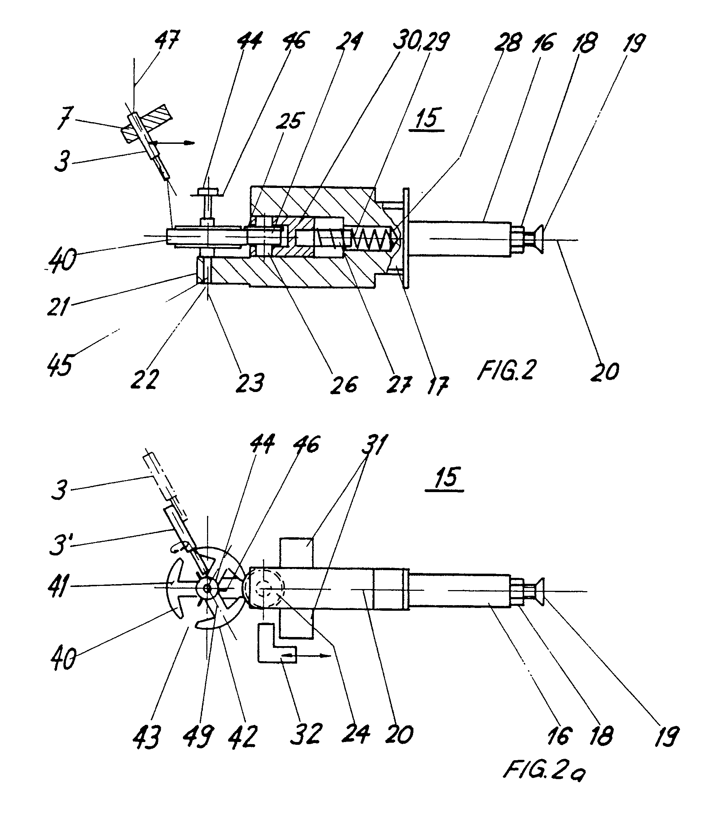

Gemäss der Fig.2, 2a weist jedes Wickelwerkzeug einen Aufnahmeschaft (16) mit Positionierflächen (17) und eine Gegenmutter (18) sowie einen Distanzanschlag (19) auf. Das Wickelwerkzeug (15) ist um eine Wickelachse (20) drehbar ausgebildet. Der Aussenstirnfläche des Wickelwerkzeuges (15) ist eine Wickelkörperaufnahme (21) vorgelagert, die eine senkrecht zur Werkzeugwickelachse (20) angeordnete Aufnahmebohrung (22), die in der Schaltachse (23) liegt, aufweist, in welche beispielsweise der 3-polige Rotor (40) mit seinem dem Kollektor (44) gegenüberliegenden Wellenende (45) einsetzbar ist. Der Wickelwerkzeugkörper ist gemäss Fig.2 U-förmig und zur Aussenstirnfläche offen ausgebildet. In der U-förmigen Innenaussparung ist ein federbelasteter Schieber (30) angeordnet, der an seiner Aussenstirnfläche gabelförmig ausgebildet ist und eine auf einer Querachse (26) angeordnete Positionierraste (24) mit einem Flansch (25) sowie einen nach innen in eine Bohrung (28) hineinragenden Führungsbolzen (27) aufweist. Der Führungsbolzen (27) ist mit einer spiralförmigen Druckfeder (29) umgeben, die sich gegen die Stirnfläche der Bohrung (28) abstützt und die Positionierraste (24) gegen den in die Wickelkörperaufnahme (21) einsetzbaren Wickelkörper (40) andrückt und mit dem Flansch (25) fixiert.

Mit dem Schieber (30) sind Gleitstücke (31) verbunden, die beidseitig an den flach ausgebildeten Seitenflächen des Wickelwerkzeuges (15) gleiten können. Die am Schieber (30) angeordnete Positionierrate (24) kann mittels der Gleitstücke (31) durch einen als Schiebestück ausgebildeten Rücksteller (32) gegen die Kraft der Druckfeder (29) aus dem Bereich der Wickelkörperaufnahme (21) zurückgeschoben werden. In Fig.2 ist der Drahtführer (3) in Wickelposition gezeichnet, in Fig.2a ist ausgezogen zusätzlich eine Andrillposition (3') veranschaulicht.

Fig.3 zeigt einen fertig bewickelten 3-poligen Rotor (40) mit Kollektor (44), an dessen Anschlussstiften (46) die Spulendrahtenden (48), vorzugsweise durch Andrillen, befestigt sind. Die minimale, axiale Entfernung zwischen den Spulenwickelachsen (49) (siehe Fig.2a) und den Anschlussstiften (48) des Kollektors (44) ist je nach dem zu bewickelnden Wickelkörper (40) vorbestimmt, damit während des Wickelns der Drahtführer (3) zwischen dem Anschlussstift (46) und der entsprechenden Spulenwickelachse (49) genügend Platz hat, um die Verlegevorschubbewegung ohne Behinderung ausüben zu können. Besonders gut geeignet sind Rotoren (40) mit geringerer Rotorblechpaketlänge (41). Das dem Kollektor (44) gegenüberliegende Wellenende (45) ist in die Wickelkörperaufnahme (21) (Fig.2) einsetzbar. Die Schalteinrichtung (4) (Fig.1), vorzugsweise mit einem Schaltstift, ist an der Stirnmantelfläche (42) des Rotorblechpaketes (41) zuführbar, und schaltet, d.h. dreht den Rotor (40) um die Schaltachse (23) (Fig.2,2a) von einer zur nachfolgenden Rotornut (43), in welche dann jeweils die Positionierraste (24) (Fig.2a) in der bereits beschriebenen Weise einrastet.

Nach Fertigstellung der Rotorwicklung werden in einem nachfolgenden Arbeitsgang die an den Anschlussstiften (46) befestigten Spulendrahtenden (48) verlötet und die Spulendrahtenden (48) durch Herabdrücken des an der Welle angeordneten Kollektors (44) zur bewickelten Spule in die in Fig.3 strichliert dargestellte Position entlastet.

**Patentansprüche**

1. Vorrichtung zum Bewickeln von Ankern elektrischer Maschinen mit mehreren Wicklungen, die unterschiedliche Spulenwickelachsen haben, mit mindestens einer Wickelstelle (2), die ein rotierendes Wickelwerkzeug (15) zur Positionierung und Fixierung eines zu bewickelnden Wickelkörpers (40) und eine Führungseinrichtung für den Draht von einer Vorratsrolle in den Wickelraum sowie eine Einrichtung zum Festlegen der Spulendrahtenden (48), ferner eine Drahttrenneinrichtung (5) und eine Einrichtung zum Weiterdrehen des Wickelkörpers (40) mittel einer Schalteinrichtung für die Bewicklung seiner nächsten Spule bis zu seiner Fixierung durch eine Positionierraste (24) des Wickelwerkzeugs, sowie Antriebsvorrichtungen und Steuerungen aufweist, **dadurch gekennzeichnet,** dass das Wickelwerkzeug (15) als Wickelkörperaufnahme eine zu seiner Rotationsachse senkrechte Aufnahmebohrung (22) für das dem Kollektor (44) gegenüberliegende Wellenende des Wickelkörpers (Rotor 40) hat, und dass die Führungseinrichtung als in X-, Y- und Z-Achsen verschiebbarer und zusätzlich kippbarer Drahtführer (3) ausgebildet ist, der Vorschubbewegungen zum Lagenwickeln ausführt.

2. Vorrichtung nach Anspruch 1, dadurch gekennzeichnet, dass das Wickelwerkzeug (15) U-förmig mit einem längeren und einem kürzeren U-Schenkel und mit einem von dem Verbindungssteg der U-Schenkel nach aussen wegragenden Aufnahmeschaft (16) zum Einsetzen des Werkzeugs an der Wickelstelle ausgebildet ist, dass die Aufnahmebohrung (22) im längeren U-Schenkel vorgesehen ist und dass die Positionierraste einen zwischen den U-Schenkeln federnd gelagerten Schieber (30) aufweist, an dessen Ende eine in eine Nut (43) des Wickelkörpers eingreifende Rolle (24) sitzt.

3. Vorrichtung nach Anspruch 2, dadurch gekennzeichnet, dass die Rolle (24) einseitig mit einem sich an ein Blechpaket (41) des Wickelkörpers (Rotor 40) anlegenden Fixierflansch (25) ausgebildet ist.

4. Vorrichtung nach Anspruch 2, dadurch gekennzeichnet, dass der Schieber (30) seitlich (Gleitstücke 31) über die U-Schenkel des Wickelwerkzeugs hinausragt und dass an der Wickelstelle (2) ein an einem der hinausragenden Teile angreifender Rücksteller (32) zum Zurückziehen des Schiebers mit der Rolle zur Freigabe des Wickelkörpers (Rotor 40) vorgesehen ist.

**Claims**

1. Apparatus for winding the armatures of electrical machines having a plurality of windings which have different coil winding axes, having at least one winding point (2) which has a rotating winding tool (15), for locating and fixing a winding former (40) which is to be wound, and a guide device for the wire from a delivery spool in the winding chamber, and a device for securing the coil wire ends (48), furthermore having a wire separating device (5) and a device for rotating the winding former (40) onward, by means of a switching device for winding the next coil of the winding former (40) up to the point where it is fixed by a locating catch (24) of the winding tool, as well as drive apparatuses and controls, characterised in that the winding tool (15), as the winding former mounting, has a mounting bore (22) perpendicular to its axis of rotation, for the end of the shaft of the winding former (rotor 40) positioned opposite to the commutator (44), and in that the guide device is configured as a wire guide (3), which can be displaced in the X-, Y- and Z-axes, and additionally can be tilted, and which performs feed movements for layer winding.

2. Apparatus according to Claim 1, characterised in that the winding tool (15) is configured in a U-shape, having a longer U-limb and a shorter U-limb and having a mounting shank (16), extending outwards away from the connecting web of the U-limbs, for inserting the tool at the winding point, in that the mounting bore (22) is provided in the longer U-limb and in that the locating catch has a slide (30), supported in a resilient manner between the U-limbs, at the end of which is seated a roller (24) which engages in a slot (43) of the winding former.

3. Apparatus according to Claim 2, characterised in that the roller (24) is configured having a fixing flange (25) on one side, which abuts against a lamination stack (41) of the winding former (rotor 40).

4. Apparatus according to Claim 2, characterised in that the slide (30) projects on the side (sliders 31) over the U-limb of the winding tool, and in that, at the winding point (2), there is provided a resetting fixture (32), engaging with one of the projecting parts, for pulling back the slide, with the roller, for releasing the winding former (rotor 40).

**Revendications**

1. Dispositif pour bobiner des induits de machines électriques avec plusieurs enroulements qui ont des axes de bobinage différents, avec au moins un poste de bobinage (2) qui présente un outil de bobinage rotatif (15) pour positionner et fixer une carcasse de bobine (40) à bobiner et un dispositif de guidage pour le fil venant d'un rouleau de réserve dans la chambre de bobinage ainsi qu'un dispositif pour placer les bouts de fil à bobiner (48), et en plus un dispositif de séparation de fil (5) et un dispositif pour continuer à faire tourner la carcasse de bobine (40), au moyen d'un dispositif d'enclenchement pour le bobinage de sa bobine suivante, jusqu'à sa fixation par une encoche de positionnement (24) de l'outil de bobinage, ainsi que des dispositifs d'entraînement et de commande, caractérisé en ce que l'outil de bobinage (15) comporte pour le logement de la carcasse de bobine un alésage de positionnement (22) perpendiculaire à son axe de rotation pour l'extrémité d'arbre de la carcasse de bobine (rotor 40) opposée au collecteur (44), et en ce que le dispositif de guidage est constitué par un guide-fil (3) déplaçable suivant les axes X, Y et Z et en plus inclinable, qui effectue des mouvements d'avance pour le bobinage en couches.

2. Dispositif suivant la revendication 1, caractérisé en ce que l'outil de bobinage (15) a la forme d'un U avec une branche plus longue et une branche plus courte et avec un arbre de positionnement (16) dépassant vers l'extérieur de l'âme de raccordement des branches du U pour l'introduction de l'outil dans le poste de bobinage, en ce que l'alésage de positionnement est prévu dans la branche plus longue du U et en ce que l'encoche de positionnement comporte un tiroir (30) appuyé élastiquement entre les branches du U, à l'extrémité duquel est posé un galet (24) engagé dans une rainure (43) de la carcasse de bobine.

3. Dispositif suivant la revendication 2, caractérisé en ce que le galet (24) est pourvu d'un côté d'une bride de fixation (25) appliquée sur un paquet de tôles (41) de la carcasse de bobine (rotor 40).

4. Dispositif suivant la revendication 2, caractérisé en ce que le tiroir (30) se prolonge latéralement (pièces de glissement 31) au-delà des branches du U de l'outil de bobinage et en ce qu'au poste de bobinage (2) il est prévu un organe de rappel (32) accrochant une des pièces de prolongement pour retirer en arrière le tiroir avec le galet pour libérer la carcasse de bobine (rotor 40).

FIG. 1

FIG 3

FIG.2

FIG.2a